# EUROPÄISCHE PATENTSCHRIFT

(11) **EP 1 134 250 B1**
(45) Veröffentlichungstag und Bekanntmachung des Hinweises auf die Patenterteilung: **19.07.2006**
(21) Anmeldenummer: 00105238.0
(22) Anmeldetag: 13.03.2000
(51) Int. Cl.: C08J 3/14, C08J 3/16, C08J 3/22

(54) **Verfahren zur Herstellung von füllstoffhaltigem Kautschukpulver**
Process for preparing filled rubber powder
Procédé de préparation de poudres de caoutchouc remplies

(43) Veröffentlichungstag der Anmeldung: 19.09.2001
(73) Patentinhaber: PKU Pulverkautschuk Union GmbH, 45772 Marl (DE)
(72) Erfinder: Gerdau, Herbert, 45721 Haltern (DE); Ernst, Uwe, 45768 Marl (DE)

(56) Entgegenhaltungen:
- WO-A-98/58985
- US-A- 3 920 604
- US-A- 4 138 375
- US-A- 4 883 829

## Beschreibung

Die Erfindung betrifft ein Verfahren zur Herstellung von füllstoffhaltigem Kautschukpulver. - Heute besteht ein gesteigerter Bedarf an pulverförmigen Kautschuken und zwar vor allem auch für die Verarbeitung von Kautschukmischungen. Die Gewinnung von verarbeitungsfähigem Kautschuk aus ballenförmig vorliegendem Rohkautschuk ist nur mit hohem Aufwand an Zeit, Energie und Personal möglich. Die Zerkleinerung der Ballen und die Mischung mit Zusatzstoffen ist aufwendig und kostenintensiv. Dagegen bietet der Einsatz rieselfähiger Kautschukpulver die Möglichkeit, Kautschukmischungen einfach und schnell herzustellen und zu verarbeiten.

US 3 920 604 beschreibt die Herstellung von füllstoffhaltigem Kautschukpulver durch die Kombination einer organischen Kautschuklösung mit einer organischen Dispersion des Füllmittels. Das organische Lösungsmittel wird blitzartig verdampft und die Kautschuk-Füllstoff-Mischung als rieselfähiges Pulver ausgefällt.

Bei einem bekannten Verfahren der eingangs genannten Art, von dem die Erfindung ausgeht (DE 37 23 214 A1) wird ein Kautschuk-Latex oder die wässrige Emulsion einer Kautschuklösung mit einer Füllstoffsuspension sowie mit einem Koagulationsmittel bzw. Fällungsmittel gemischt und füllstoffhaltige Kautschukpartikel werden ausgefällt. Das bekannte Verfahren hat sich grundsätzlich bewährt. Es ist aber nichtsdestoweniger insbesondere im Hinblick auf die Steuerbarkeit bzw. Einstellbarkeit der Eigenschaften der hergestellten Produkte sowie in Bezug auf die Reproduzierbarkeit der Eigenschaften des hergestellten Kautschukpulvers verbesserungsfähig.

Dementsprechend liegt der Erfindung das technische Problem zugrunde, ein Verfahren der eingangs genannten Art anzugeben, mit dem füllstoffhaltiges Kautschukpulver hergestellt werden kann, dessen Eigenschaften auf funktionssichere Weise eingestellt bzw. gesteuert werden können und welches sich durch eine hohe Reproduzierbarkeit auszeichnet.

Zur Lösung dieses technischen Problems lehrt die Erfindung ein Verfahren zur Herstellung von füllstoffhaltigem Kautschukpulver gemäß Patentanspruch 1,
wobei eine Lösung zumindest einer Kautschukkomponente in zumindest einem organischen Lösungsmittel mit einer Dispersion zumindest eines Füllstoffes gemischt wird,
wobei das organische Lösungsmittel anschließend aus der Mischung entfernt wird,
und wobei füllstoffhaltige Kautschukpartikel aus der Mischung ausgefällt werden. Lösung der Kautschukkomponente meint im Rahmen der Erfindung eine echte Lösung der Kautschukkomponente bzw. des Kautschuks in dem organischen Lösungsmittel. Lösung meint hier also keine Suspension bzw. Dispersion oder Emulsion des Kautschuks in dem Lösungsmittel. Der Erfindung liegt insoweit die Erkenntnis zugrunde, dass im Hinblick auf das erfindungsgemäße technische Problem überraschende Resultate erzielt werden, wenn eine echte Kautschuklösung unmittelbar mit der Dispersion des Füllstoffes gemischt wird. Nach einer Ausführungsform der Erfindung wird eine Lösung bzw. Kautschuklösung eingesetzt, die bei einer Lösungsmittelpolymerisation zur Herstellung eines synthetischen Kautschuks anfällt. Entsprechende Verfahren zur Herstellung solcher synthetischer Kautschuke sind aus dem Stand der Technik bekannt. - Nach einer anderen Ausführungsform der Erfindung wird die Lösung bzw. Kautschuklösung durch einfaches Auflösen der Kautschukkomponente in einem organischen Lösungsmittel hergestellt. Bei der in dem organischen Lösungsmittel gelösten Kautschukkomponente kann es sich um einen synthetischen Kautschuk und/oder um einen natürlichen Kautschuk handeln. Nach bevorzugter Ausführungsform der Erfindung wird als synthetische Kautschukkomponente zumindest eine Substanz aus der Gruppe "Polybutadien, Polyisopren, Copolymerisat aus Butadien und Styrol, Ethylen-Propylen-Copolymerisat, Ethylen-Propylen-Dien-Terpolymerisat" eingesetzt. Nach einer sehr bevorzugten Ausführungsform der Erfindung wird als Kautschukkomponente Polybutadien verwendet. Nach einer anderen bevorzugten Ausführungsform der Erfindung wird als Kautschukkomponente Ethylen-Propylen-Dien-Mischpolymerisat (EPDM) eingesetzt.

Vorzugsweise wird als organisches Lösungsmittel für die Kautschukkomponente zumindest ein aliphatischer Kohlenwasserstoff und/oder zumindest ein aromatischer Kohlenwasserstoff verwendet. Nach einer Ausführungsform der Erfindung wird Pentan oder ein längerkettiges flüssiges Alkan als organisches Lösungsmittel für die Kautschukkomponente eingesetzt. Es liegt im Rahmen der Erfindung, eine Lösung einer Kautschukkomponente in zumindest einem flüssigen aliphatischen Kohlenwasserstoff aus der Gruppe "Pentan, Hexan, Heptan" zu verwenden. Nach einer anderen Ausführungsform der Erfindung wird zumindest ein flüssiger aromatischer Kohlenwasserstoff, wie beispielsweise Benzol oder Toluol als organisches Lösungsmittel für die Kautschukkomponente eingesetzt.

Dass im Rahmen der Erfindung mit einer Dispersion eines Füllstoffes gearbeitet wird, meint, dass der Füllstoff fein verteilt in einer flüssigen Phase, vorzugsweise in wässriger Phase vorliegt. Es liegt im Rahmen der Erfindung, dass der Füllstoff in Form von feinverteilten Feststoffteilchen in der flüssigen Phase, vorzugsweise wässrigen Phase, vorliegt. Die Füllstoffdispersion kann zweckmäßigerweise durch Aufschlämmen des Füllstoffes in Wasser und anschließendes Dispergieren mit einem geeigneten Dispergiergerät hergestellt werden. Nach einer Ausführungsform der Erfindung wird die Dispersion des Füllstoffes vorgelegt und wird die Kautschuklösung zu dieser Dispersion gegeben bzw. zugetropft. Erfindungsgemäß wird als Füllstoff Ruß eingesetzt. Vorzugsweise wird eine 2 bis 7 Gew.-%ige wässrige Dispersion bzw. Suspension von Ruß mit der Kautschuklösung gemischt. Zweckmäßigerweise beträgt die Menge des gemäß Patentanspruch 1 mit der Kautschuklösung gemischten Füllstoffes 10 bis 100 Gewichtsteile Füllstoff pro 100 Gewichtsteile Kautschuk.

Im erfindungsgemäßen Verfahren wird das organische Lösungsmittel durch Abdestillieren aus der Mischung entfernt. Vorzugsweise wird das organische Lösungsmittel unmittelbar beim Mischen und/oder unmittelbar nach dem Mischen der Kautschuklösung mit der Füllstoffdispersion entfernt. Hierzu wird zweckmäßigerweise die Mischung während oder nach der Zugabe der Kautschuklösung zu der Füllstoffdispersion erhitzt. Erfindungsgemäß wird nach dem Entfernen des organischen Lösungsmittels eine weitere Menge einer Dispersion eines Ruß- Füllstoffes zu der Mischung gegeben. Zweckmäßigerweise handelt es sich um die gleiche Füllstoffdispersion, die auch zuvor bereits mit der Kautschuklösung gemischt wurde.

Erfindungsgemäß ist von ganz besonderer Bedeutung, dass eine zweite Kautschukkomponente zu der Mischung aus der ersten Kautschukkomponente und dem Füllstoff gegeben wird. Dabei wird die zweite Kautschukkomponente nach dem Entfernen des organischen Lösungsmittels zu der Mischung gegeben. Die zweite Kautschukkomponente wird nach der zweiten Zugabe einer Füllstoffdispersion zugefügt. Es liegt im Rahmen der Erfindung, dass es sich bei der zweiten Kautschukkomponente und bei der ersten Kautschukkomponente (aus Patentanspruch 1) um unterschiedliche Kautschukarten handelt. Nach der Zugabe einer zweiten Kautschukkomponente werden füllstoffhaltige Kautschukpartikel eines Copolymers aus den beiden Kautschukkomponenten ausgefällt. Mit anderen Worten wird ein füllstoffhaltiger Pulverkautschuk erzeugt, der ein füllstoffhaltiges Copolymer der beiden Kautschukarten ist. Dieser Pulverkautschuk aus einem Copolymer zeichnet sich durch ganz besondere vorteilhafte Eigenschaften aus. Vor allem können die Eigenschaften des auf diese Weise hergestellten Pulverkautschuks mit einfachen Maßnahmen überraschend gezielt gesteuert werden und diese Ausführungsform des erfindungsgemäßen Verfahrens zeichnet sich durch eine sehr hohe Reproduzierbarkeit aus.

Erfindungsgemäß ist die zweite Kautschukkomponente ein in Emulsion hergestellter Styrol-Butadien-Kautschuk (E-SBR).

Erfindungsgemäß wird zumindest ein Koagulationsmittel bzw. Fällungsmittel zum Ausfällen der füllstoffhaltigen Kautschukpartikel zu der Mischung gegeben. Das Koagulationsmittel wird nach dem Entfernen des organischen Lösungsmittels zu der Mischung gegeben. Nach einer bevorzugten Ausführungsform der Erfindung wird das zumindest eine Koagulationsmittel nach der Zugabe der zweiten Kautschukkomponente zu der Mischung gegeben. Als Koagulationsmittel wird vorzugsweise zumindest ein Metallsalz aus der folgenden Gruppe eingesetzt: "Aluminiumsalz, Bariumsalz, Eisensalz, Kobaltsalz, Magnesiumsalz, Nickelsalz, Zinksalz". Nach bevorzugter Ausführungsform der Erfindung wird ein Aluminiumsalz, vorzugsweise Aluminiumsulfat, verwendet. Zweckmäßigerweise werden 0,1 bis 2 Gewichtsteile eines wasserlöslichen Metallsalzes pro 100 Gewichtsteile Kautschuk als Koagulationsmittel eingesetzt. Es liegt fernerhin im Rahmen der Erfindung, mit dem Koagulationsmittel einen geeigneten pH-Wert für die Fällung einzustellen. Vorzugsweise wird für die Fällung ein pH-Wert <7 eingestellt. Es liegt auch im Rahmen der Erfindung, eine Säure zur pH-Wert-Einstellung zuzugeben.

Nach bevorzugter Ausführungsform der Erfindung werden die ausgefällten Kautschukpartikel mit einem Beschichtungsmittel beschichtet. Dabei liegt es im Rahmen der Erfindung, dass die Zugabe des Beschichtungsmittels zu dem bereits koagulierten Kautschukmaterial erfolgt. Zweckmäßigerweise wird als Beschichtungsmittel ein Füllstoff für Kautschuk eingesetzt. Vorzugsweise wird dabei der Füllstoff verwendet, der bereits zu Anfang mit der Kautschuklösung gemischt wurde. Bevorzugt handelt es sich bei dem Beschichtungsmittel um Ruß.

Gegenstand der Erfindung ist deshalb ein Verfahren zur Herstellung von füllstoffhaltigem Kautschukpulver, wobei eine in einem organischen Lösungsmittel gelöste Kautschukkomponente zunächst mit einer Ruß-Füllstoffdispersion gemischt wird, das organische Lösungsmittel durch Abdestillieren aus der Mischung entfernt wird, anschließend eine weitere Ruß Füllstoffdispersion der Mischung zugefügt wird, und nach Zugabeende der zweiten Füllstoffdispersion als zweite Kautschukkomponente, in Emulsion hergestellten Styrol-Butadien-Kautschuk, der Mischung zugefügt wird und mit Hilfe eines Koagulationsmittels die füllstoffhaltigen Kautschukpartikel ausgefällt werden.

Das erfindungsgemäße Verfahren kann sowohl kontinuierlich als diskontinuierlich durchgeführt werden. - Der Erfindung liegt die Erkenntnis zugrunde, dass mit dem erfindungsgemäßen Verfahren die gewünschten Eigenschaften des letztendlich erhaltenen Pulverkautschuks überraschend einfach und funktionssicher gezielt eingestellt werden können. Diese Eigenschaften des hergestellten Pulverkautschuks zeichnen sich dabei durch eine überraschend hohe Reproduzierbarkeit aus. Die vorstehend genannten Vorteile werden erfindungsgemäß im Verfahren erzielt, bei dem eine zweite Kautschukkomponente zugefügt wird und bei der ein pulverförmiges füllstoffhaltiges Kautschuk-Copolymer hergestellt wird.

Nachfolgend werden bevorzugte Ausführungsformen des erfindungsgemäßen Verfahrens näher erläutert:

Vorzugsweise wird die in einem organischen Lösungsmittel gelöste erste Kautschukkomponente zunächst aus diesem organischen Lösungsmittel ausgefällt und getrocknet. Anschließend wird die erste Kautschukkomponente zweckmäßigerweise wieder in einem organischen Lösungsmittel gelöst. Vorzugsweise wird dabei eine 2 bis 10 Gew.-%ige Lösung der ersten Kautschukkomponente in dem organischen Lösungsmittel hergestellt. Nach bevorzugter Ausführungsform der Erfindung wird eine wässrige Dispersion eines Füllstoffes in einem Behälter vorgelegt und wird die in dem organischen Lösungsmittel gelöste erste Kautschukkomponente zu dieser wässrigen Dispersion, vorzugsweise unter Rühren, zugefügt bzw. zugetropft. Bei der Dispersion des Füllstoffes handelt es sich bevorzugt um eine 2 bis 7 Gew.%-ige wässrige Dispersion bzw. Suspension von Ruß. Die Mischung aus der Kautschuklösung und der Füllstoffdispersion wird anschließend bevorzugt aufgeheizt, so dass das organische Lösungsmittel verdampft und zweckmäßigerweise mit einer geeigneten Destillationsvorrichtung abdestilliert wird. Die Mischung wird im Anschluss daran mit einer weiteren Menge einer Ruß- Füllstoffdispersion, bevorzugt mit der wässrigen Rußdispersion, gemischt und mit Hilfe eines Dispergiergerätes dispergiert. Danach wird eine zweite Kautschukkomponente zu der Mischung gegeben. Es handelt sich bei der zweiten Kautschukkomponente um einen in Emulsion hergestellten Styrol-Butadien-Kautschuk. Vorzugsweise wird eine Mischung der zweiten Kautschukkomponente mit einem Öl zugesetzt. Die Zugabe der zweiten Kautschukkomponente erfolgt zweckmäßigerweise unter Rühren. Bevorzugt wird danach ein Koagulationsmittel, vorzugsweise Aluminiumsulfat, zugesetzt. Der pH-Wert der Mischung wird beispielsweise auf etwa 6,5 eingestellt. Im Anschluss daran wird bevorzugt ein Beschichtungsmittel zur Beschichtung der ausgefällten Kautschukpartikel zugefügt. Bei dem Beschichtungsmittel handelt es sich nach einer Ausführungsform der Erfindung um den Füllstoff, vorzugsweise also um Ruß. Nach der Zugabe des Beschichtungsmittels wird bevorzugt der pH-Wert weiter gesenkt, beispielsweise auf pH = 5. Im Anschluss daran werden die ausgefällten Kautschukpartikel von der flüssigen Phase abgetrennt. Dies wird beispielsweise durch Sieben und anschließendes Trocknen verwirklicht. - Nachfolgend wird die Erfindung anhand eines konkreten Ausführungsbeispiels näher erläutert.

### Ausführungsbeispiel:

In Toluol gelöstes cis-Polybutadien (erste Kautschukkomponente) wurde mit Hilfe von Methanol aus der Toluollösung ausgefällt und anschließend getrocknet. Danach wurde diese getrocknete erste Kautschukkomponente in n-Hexan aufgelöst, wobei eine 6 Gew.-%ige Lösung der ersten Kautschukkomponente in n-Hexan hergestellt wurde. - In einem Behälter wurde eine 4 Gew.-%ige Rußdispersion vorgelegt. Zu dieser Rußdispersion wurde die Kautschuklösung (cis-Polybutadien in n-Hexan) zugetropft. Das Mengenverhältnis von Ruß zu der ersten Kautschukkomponente betrug dabei 20 Gewichtsteile Ruß auf 100 Gewichtsteile erste Kautschukkomponente. Der Behälter wurde danach auf 80 °C aufgeheizt, um das n-Hexan abzudestillieren. Im Anschluss daran wurde die erhaltene Mischung nochmals mit einer 4 Gew.-%igen Rußdispersion vermischt, wobei bezüglich dieser Zugabe 12 Gewichtsteile Ruß auf 100 Gewichtsteile erste Kautschukkomponente kamen. Nach Zumischung dieser Rußdispersion wurde die Mischung mit Hilfe eines Dispergiergerätes dispergiert. Anschließend wurde mit Öl vermischter in Emulsion hergestellter Styrol-Butadien-Kautschuk (E-SBR) unter Rühren zu der Mischung gegeben. Dann wurde der pH-Wert der Mischung mit Aluminiumsulfat auf etwa 6,5 eingestellt. Im Anschluss daran wurde Ruß als Beschichtungsmittel zu der Mischung gegeben und zwar 20 Gewichtsteile Ruß auf 100 Gewichtsteile Kautschuk (erste und zweite Kautschukkomponente). Danach wurde mit Aluminiumsulfat ein pH-Wert von 5 eingestellt und anschließend wurde noch ein wenig Ruß zugesetzt. Im Anschluss daran wurden die ausgefällten Kautschukpartikel durch Sieben und Trocknen abgetrennt.

## Patentansprüche

1. Verfahren zur Herstellung von füllstoffhaltigem Kautschukpulver,
wobei eine in einem organischen Lösungsmittel gelöste Kautschukkomponente zunächst mit einer Ruß-Füllstoffdispersion gemischt wird,
das organische Lösungsmittel durch Abdestillieren aus der Mischung entfernt wird,
anschließend eine weitere Ruß-Füllstoffdispersion der Mischung zugefügt wird,
und nach Zugabeende der zweiten Füllstoffdispersion als zweite Kautschukkomponente in Emulsion hergestellter Styrol-Butadien-Kautschuk der Mischung zugefügt wird und mit Hilfe eines Koagulationsmittels die füllstoffhaltigen Kautschukpartikel ausgefällt werden.

2. Verfahren nach Anspruch 1, wobei als organisches Lösungsmittel zumindest ein aliphatischer Kohlenwasserstoff und/oder zumindest ein aromatischer Kohlenwasserstoff eingesetzt wird.

3. Verfahren nach Anspruch 1 oder 2, wobei die ausgefällten Kautschukpartikel mit einem Beschichtungsmittel beschichtet werden.

## Claims

1. A process for the production of filled rubber powder,
a rubber component dissolved in an organic solvent being first mixed with a carbon-black-filler dispersion,
the organic solvent being removed from the mixture via distillation,
another carbon-black-filler dispersion then being added to the mixture,
and, after the end of addition of the second filler dispersion, styrene-butadiene rubber prepared in emulsion being added as second rubber component to the mixture, and the filled rubber particles being precipitated with the aid of a coagulant.

2. A process according to claim 1, at least one aliphatic hydrocarbon and/or at least one aromatic hydrocarbon being used as organic solvent.

3. A process according to claim 1 or 2, the precipitated rubber particles being coated with a coating material.

## Revendications

1. Procédé de fabrication de poudre de caoutchouc contenant une matière de remplissage,
**caractérisé en ce qu'**
on mélange d'abord un composant de caoutchouc dissous dans un solvant organique avec une dispersion de matière de remplissage à base de suie,
on élimine du mélange, par distillation, le solvant organique,
ensuite on ajoute au mélange une autre dispersion de matière de remplissage à base de suie,
et après addition de la seconde dispersion de matière de remplissage, on ajoute au mélange un caoutchouc butadiène-styrol, fabriqué sous forme d'émulsion, en tant que second composant de caoutchouc, et l'on fait précipiter, à l'aide d'un moyen de coagulation, les particules de caoutchouc contenant la matière de remplissage.

2. Procédé selon la revendication 1,
**caractérisé en ce qu'**
on utilise, en tant que solvant organique, au moins un hydrocarbure aliphatique et/ou au moins un hydrocarbure aromatique.

3. Procédé selon la revendication 1 ou 2,
**caractérisé en ce qu'**
on revêt les particules de caoutchouc précipitées, d'un agent de revêtement.
